# EUROPEAN PATENT SPECIFICATION

(11) **EP 3 041 708 B1**
(45) Date of publication and mention of the grant of the patent: **15.11.2017**
(21) Application number: 14766604.4
(22) Date of filing: 29.08.2014
(51) Int. Cl.: B60N 2/46, B60R 7/04

(54) **ADJUSTABLE VEHICLE ARMREST ASSEMBLY HAVING A TAMBOUR DOOR**
VERSTELLBARER FAHRZEUG ARMLEHNEN ZUSAMMENBAU MIT ROLLTÜR
ENSEMBLE ACCOUDOIR DE VÉHICULE AJUSTABLE AVEC PORTE RIDEAU

(30) Priority: 06.09.2013 US 201361874918 P
(43) Date of publication of application: 13.07.2016
(73) Proprietor: Johnson Controls Technology Company, Milwaukee, WI 53209 (US)
(72) Inventor: BOZIO, Ronald A., Holland, MI 49424 (US); HIPSHIER, Jason M., Hudsonville, MI 49426 (US); SHERBURN, Kenneth Daniel, Grandville, MI 49418 (US); HARMELINK, Chris J., Grandville, MI 49418 (US); ANDERSON, Rick A., Grand Haven, MI 49417 (US)
(74) Representative: Trinks, Ole
(86) International application number: PCT/US2014/053564
(87) International publication number: WO 2015/034788

(56) References cited:
- DE-A1-102007 024 000
- FR-A1- 2 961 763
- US-A- 5 752 740

## Description

### BACKGROUND

FR 2 691 763 A1 relates to an armrest system for use in central console of cab interior of automobile. The armrest system has a height adjusting mechanism with upper and lower walls positioned between an armrest and a base and integrated with the armrest and the base, respectively.

US 5,752,740 A relates to a motor vehicle armrest with storage space. The armrest has a basic body constructed with an upwardly open receiving compartment and a closing flap which covers the receiving compartment. The closing flap is swivellably held on the basic body and has an arm supporting padding and a depositing compartment. For making the depositing tray accessible from the rear seat of the vehicle between the backrests of the two front seats the arm padding support is provided with a central opening. A sliding blind which covers the depositing tray is longitudinally slidably guided in the closing flap.

DE 10 2007 024 000 A1 relates to a height-adjustable center armrest disposed between two motor vehicle seats. The armrest has an arm support that can be adjusted relative to a base part affixed to the chassis of the motor vehicle. The armrest comprises an intermediate part that is articulated on the base part and disposed between the arm support and the base part and is adjustable relative to the base part with the arm support resting on said intermediate part.

The invention relates generally to an adjustable vehicle armrest assembly having a tambour door.

Certain vehicles include an armrest to facilitate passenger comfort. The armrest may be coupled to a vehicle scat, a door panel, and/or a floor console. In certain configurations, the vertical position of the armrest is adjustable to accommodate vehicle occupants of different heights and/or builds. For example, the armrest may be configured to rotate about a pivot joint between a lowered position and a raised position. In addition, the horizontal position of the armrest may be adjustable to accommodate occupants in various seating positions. For example, the armrest may slide in a fore/aft direction relative to the vehicle occupant, thereby facilitating occupant comfort. Certain armrests may be configured to facilitate vertical and horizontal adjustment.

Vehicles may also include storage compartments positioned throughout the vehicle interior. For example, an overhead console may include a storage compartment suitable for storing sunglasses, driving glasses, or other items. Other storage compartments may be located within a center console, an armrest, seats, door panels, or other areas of the vehicle interior. Certain storage compartments include a door configured to secure the contents of the compartment and/or to hide the contents from view. For example, it may be desirable to position a storage compartment within a floor console beneath an armrest, and utilize the armrest, or a door within the armrest (e.g., a tambour door), to facilitate access to the storage compartment. Unfortunately, if the vertical and/or horizontal position of the armrest is adjustable, the armrest may not be able to effectively cover the storage compartment while the armrest is in certain positions, thereby rendering the adjustable armrest unsuitable for controlling access to a storage compartment positioned beneath the armrest.

### BRIEF DESCRIPTION OF THE INVENTION

The present invention relates to a vehicle armrest assembly including a support structure and a shroud pivotally coupled to the support structure. The vehicle armrest assembly also includes an armrest slidingly supported by the shroud. The armrest is configured to slide between a retracted position and an extended position relative to the shroud, and the shroud facilitates rotation of the armrest between a raised position and a lowered position relative to the support structure. In addition, the vehicle armrest assembly includes a track assembly extending along the support structure, the shroud, and the armrest. The vehicle armrest assembly further includes a tambour door slidingly supported by the track assembly. The track assembly is configured to enable the tambour door to slide between an opened position and a closed position relative to the armrest while the armrest is in the retracted position, the extended position, or a position therebetween, and while the armrest is in the raised position, the lowered position, or a position therebetween.
FIG. 1 is a perspective view of an exemplary vehicle that may include an adjustable armrest assembly having a tambour door.
FIG. 2 is a perspective view of an embodiment of an adjustable armrest assembly having a tambour door.
FIG. 3 is a side view of the adjustable armrest assembly of FIG. 2.
FIG. 4 is a cross-sectional perspective view of the floor console of FIG. 2, taken along line 4-4.
FIG. 5 is a perspective view of an embodiment of an adjustable armrest assembly having a track assembly configured to slidingly support a tambour door.
FIG. 6 is a cross-sectional view of the adjustable armrest assembly of FIG. 5.
FIG. 7 is a cross-sectional view of the adjustable armrest assembly of FIG. 5 with the armrest in a raised position.
FIG. 8 is a cross-sectional view of the adjustable armrest assembly of FIG. 5 with the armrest in a raised and extended position.

### DETAILED DESCRIPTION

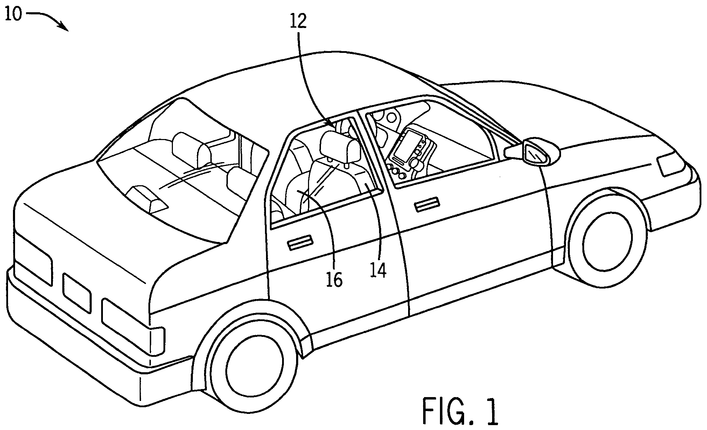

FIG. 1 is a perspective view of an exemplary vehicle that may include an adjustable armrest assembly having a tambour door. As illustrated, the vehicle 10 includes an interior 12 having a seat 14 and a floor console 16. As discussed in detail below, the floor console 16 may be part of a vehicle armrest assembly having a vertically and horizontally adjustable armrest, and a tambour door disposed on the armrest and configured to facilitate access to a storage compartment within the floor console. The vehicle armrest assembly includes a support structure, such as the illustrated floor console 16, and a shroud pivotally coupled to the support structure. The vehicle armrest assembly also includes an armrest slidingly supported by the shroud. The armrest is configured to slide between a retracted position and an extended position relative to the shroud, and the shroud facilitates rotation of the armrest between a raised position and a lowered position relative to the support structure. Accordingly, the position of the armrest is vertically and horizontally adjustable. In addition, the vehicle armrest assembly includes a tambour door slidingly disposed on the armrest. The tambour door is configured to slide between an opened position and a closed position relative to the armrest while the armrest is in the retracted position, the extended position, or a position therebetween, and while the armrest is in the raised position, the lowered position, or a position therebetween. Accordingly, the tambour door selectively facilitates and blocks access to a storage compartment within the support structure regardless of armrest position. The armrest assembly includes a track assembly configured to support the tambour door and to enable the tambour door to slide between the opened position and the closed position. The track assembly may include multiples tracks. For example, in certain embodiments, the support structure includes a first track, the shroud includes a second track, and the armrest includes a third track. The first, second, and third tracks are aligned with one another to enable the tambour door to slide between the opened position and the closed position while the armrest is in the retracted position, the extended position, or a position therebetween, and while the armrest is in the raised position, the lowered position, or a position therebetween. In certain embodiments, the second and third tracks interface with one another to establish a substantially continuous path between a first end of the second track and a second end of the third track while the armrest is in the retracted position, the extended position, or a position therebetween. In addition, the first track and the second track are separated from one another by a gap while the armrest is in the lowered position to facilitate rotation of the shroud relative to the support structure. Because the tracks are configured to maintain alignment with one another as the armrest slides and/or rotates, the track assembly facilitates movement of the tambour door between the opened and closed positions regardless of the vertical and/or horizontal position of the armrest.

While the adjustable armrest assembly is described herein with reference to a floor console, it should be appreciated that the adjustable armrest assembly may be employed within other vehicle interior components. For example, a seat, a door panel, and/or a rear seat assembly may include an adjustable armrest assembly having an armrest configured to be raised/lowered and/or adjusted fore/aft to a position that facilitates driver and/or passenger comfort. The armrest assembly includes a tambour door slidingly coupled to the armrest, and configured to slide between an open position that facilitates access to a storage compartment within the vehicle interior component and a closed position that blocks access to the storage compartment.

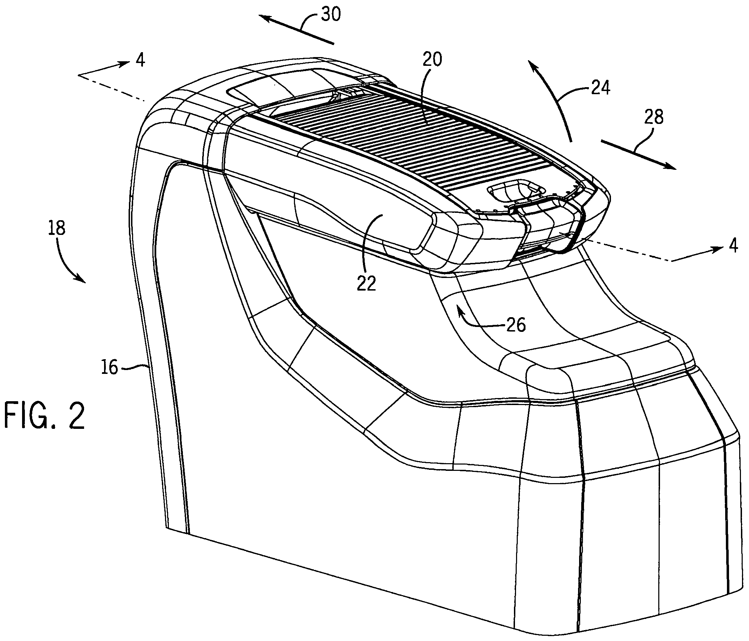

FIG. 2 is a perspective view of an embodiment of an adjustable armrest assembly 18 having a tambour door 20. As illustrated, the floor console 16 forms a support structure for the adjustable armrest assembly 18. As discussed in detail below, the floor console 16 may include a storage compartment configured to retain various items, such as documents, glasses, and/or portable electronic devices, among other items. In the illustrated embodiment, the armrest assembly 18 includes an armrest 22 configured to rotate in an upward direction 24 between the illustrated lowered position and a raised position. The armrest assembly 18 also includes a shroud positioned below the armrest 22 and configured to rotate with the armrest 22. In the illustrated embodiment, the shroud is disposed within a recess 26 in the floor console 16. Accordingly, with the armrest 22 in the illustrated lowered position, the floor console 16 substantially covers the shroud. However, when the armrest 22 is rotated in the upward direction 24, a portion of the shroud is exposed. The shroud and the armrest 22 are configured to substantially cover an opening in the storage compartment while the armrest is in the lowered position, the raised position, or a position therebetween. As a result, items within the storage compartment are retained regardless of armrest position. In certain embodiments, an adjustment mechanism may be employed to control movement of the armrest 22 relative to the floor console 16, and to hold the armrest 22 in one of a variety of vertical positions.

In the illustrated embodiment, the armrest 22 is also configured to slide in a forward direction 28 from the illustrated retracted position to an extended position. As discussed in detail below, the armrest 22 is slidingly supported by the shroud such that the armrest may transition between the retracted and extended positions regardless of the vertical position of the armrest. For example, the armrest 22 is slidable between the retracted position and the extended position while the armrest 22 is in the lowered position, the raised position, or a position therebetween. In addition, the armrest 22 is rotatable between the lowered position and the raised position while the armrest is in the retracted position, the extended position, or a position therebetween. Accordingly, the vertical and/or horizontal position of the armrest may be adjusted to facilitate occupant comfort.

In the illustrated embodiment, the tambour door 20 is slidingly disposed on the armrest 22 and configured to slide in a rearward direction 30 between the illustrated closed position and an opened position. As will be appreciated, the closed position substantially blocks the opening to the storage compartment, and the open position facilitates access to the storage compartment. For example, a vehicle occupant may slide the tambour door 20 in the direction 30, access items within the storage compartment, and then slide the tambour door 20 in the direction 28 to close the storage compartment. As discussed in detail below, the tambour door 20 is configured to slide between the opened and closed positions while the armrest is in the retracted position, the extended position, or a position therebetween, and while the armrest is in the raised position, the lowered position, or a position therebetween. Accordingly, an occupant may access an interior of the storage compartment regardless of the vertical and/or horizontal position of the armrest. In certain embodiments, a top surface of the tambour door 20 may be cushioned, thereby enhancing occupant comfort when the occupant rests an arm on the tambour door.

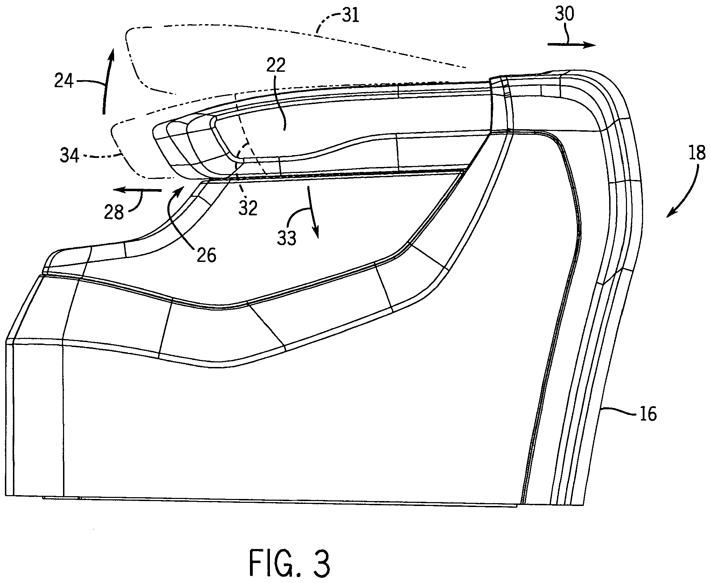

FIG. 3 is a side view of the adjustable armrest assembly of FIG. 2. The first set of phantom lines 31 shows the armrest 22 in the raised position. With the armrest 22 in the raised position, the shroud 32 is exposed. However, contact between the shroud 32 and the floor console 16 blocks items from being released from the storage compartment while the armrest is in the raised position. As a result, items within the storage compartment are retained regardless of armrest position. From the raised position, the armrest 22 may be rotated in a downward direction 33 toward the lowered position, as shown in solid lines. Furthermore, the second set of phantom lines 34 shows the armrest 22 in the extended position. Because the armrest 22 is configured to slide relative to the shroud 32, the shroud maintains the enclosed space of the storage compartment regardless of the horizontal position of the armrest 22. From the extended position, the armrest 22 may be translated in the rearward direction 30 toward the retracted position, as shown in solid lines.

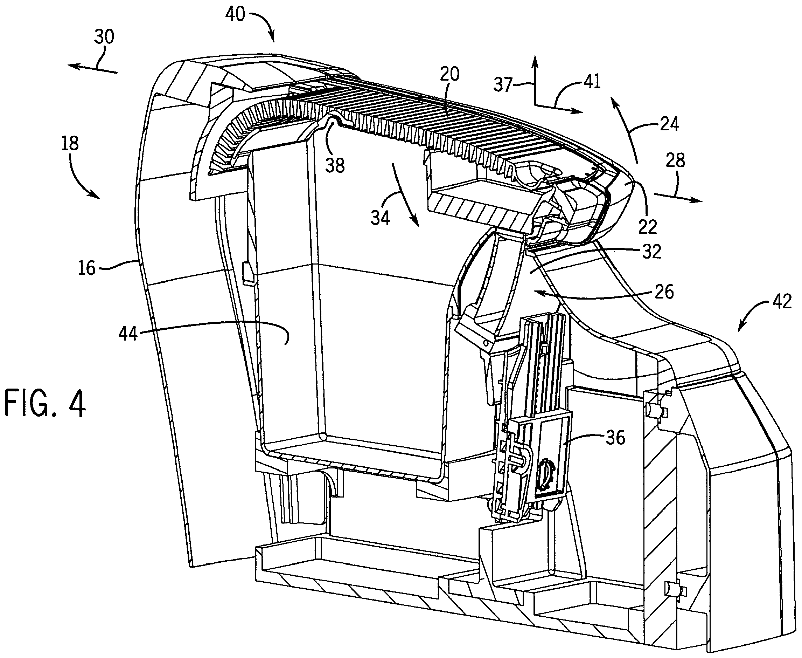

FIG. 4 is a cross-sectional perspective view of the floor console of FIG. 2, taken along line 4-4. As illustrated, the armrest assembly 18 includes an adjustment mechanism 36 configured to hold the armrest 22 in one of a variety of vertical positions including the lowered position and the raised position. Accordingly, a height of the armrest 22 may be adjusted in a vertical direction 37 to facilitate passenger comfort (e.g., to accommodate passengers of different heights and/or builds). In the illustrated embodiment, the shroud 32 is pivotally coupled to the floor console 16 by a pivot joint 38, thereby facilitating rotation of the armrest 22 and the shroud 32 relative to the floor console 16. The pivot joint 38 is positioned at a first (e.g., rear) end 40 of the armrest assembly 18 along a longitudinal direction 41. In addition, the adjustment mechanism 36 is positioned at a second (e.g., front) end 42 of the armrest assembly 18, opposite the first end, along the longitudinal direction 41. Because the adjustment mechanism 36 is positioned at the opposite longitudinal end of the armrest assembly 18 from the pivot joint 38, the adjustment mechanism 36 may be subjected to less loading (e.g., torque) than an adjustment mechanism integrated within or coupled to the pivot joint. Accordingly, the adjustment mechanism may be constructed from lighter and/or less expensive materials (e.g., plastic), thereby reducing vehicle weight and/or manufacturing costs.

As previously discussed, the shroud 32 is disposed within a recess 26 of the floor console 16. In this configuration, contact between the shroud 32 and the floor console 16 blocks items from being released from the storage compartment 44. As a result, items within the storage compartment 44 are retained regardless of armrest position. In the illustrated embodiment, the adjustment mechanism 36 is positioned within a cavity between an exterior surface of the floor console 16 and an interior surface of the storage compartment 44. Accordingly, the adjustment mechanism 36 is hidden from the vehicle occupants, thereby enhancing the appearance of the vehicle interior.

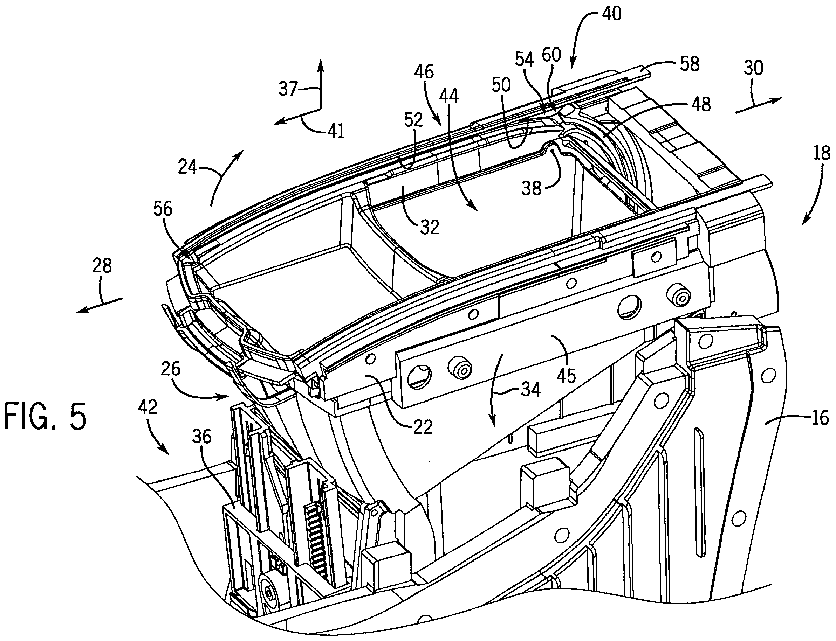

FIG. 5 is a perspective view of an embodiment of an adjustable armrest assembly 18 having a track assembly 46 configured to slidingly support a tambour door. In the illustrated embodiment, the armrest assembly 18 includes a rail assembly 45 coupled to the shroud 32 and to the armrest 22. The rail assembly 45 is configured to enable the armrest 22 to slide relative to the shroud 32, thereby facilitating movement of the armrest 22 in the longitudinal direction 41. In addition, the pivot joint 38, which pivotally couples the shroud 32 to the floor console 16, is configured to enable the armrest 22 to rotate relative to the floor console 16, thereby facilitating movement of the armrest 22 in the vertical direction 37. Accordingly, the position of the armrest 22 may be adjusted to facilitate passenger comfort (e.g., to accommodate passengers of different heights and/or builds). In the illustrated embodiment, the armrest assembly 18 includes a track assembly 46 configured to slidingly support the tambour door (e.g., via protrusions that extend laterally outward from the tambour door). The track assembly 46 includes a first track 48, a second track 50, and a third track 52. As illustrated, the first track 48 is part of the floor console 16 (e.g., formed as a component of the floor console, coupled to the floor console, etc.), the second track 50 is part of the shroud 32 (e.g., formed as a component of the shroud, coupled to the shroud, etc.), and the third track 52 is part of the armrest 22 (e.g., formed as a component of the armrest, coupled to the armrest, etc.). The first, second, and third tracks are aligned with one another to enable the tambour door to slide between the opened position and the closed position while the armrest is in the retracted position, the extended position, or a position therebetween, and while the armrest is in the raised position, the lowered position, or a position therebetween.

In the illustrated embodiment, the second track 50 and the third track 52 interface with one another to establish a substantially continuous path between a first end 54 of the second track 50 and a second end 56 of the third track 52 while the armrest 22 is in the retracted position, the extended position, or a position therebetween. For example, as the armrest 22 is translated in the direction 28 from the illustrated retracted position toward the extended position, the third track 52, which is part of the armrest 22, moves in the direction 28 away from the second track 50, which is part of the shroud 32. However, the third track 52 includes an extension 58 that maintains continuity of the path as the third track 52 moves in the direction 28. A length of the extension 58 may be particularly selected to accommodate the horizontal range of movement of the armrest 22.

In addition, the first track 48 and the second track 50 are separated from one another by a gap 60 while the armrest 22 is in the lowered position to facilitate rotation of the shroud 32 relative to the floor console 16. For example, with the armrest 22 in the illustrated lowered position, the tambour door extends across the gap 60 between the first track 48 and the second track 50. As the armrest 22 rotates in the direction 24, a width of the gap 60 decreases, but the second track 50 remains aligned with the first track 48, thereby facilitating movement of the tambour door along the tracks regardless of the vertical position of the armrest. The width of the gap 60 may be particularly selected to accommodate the vertical range of movement of the armrest 22.

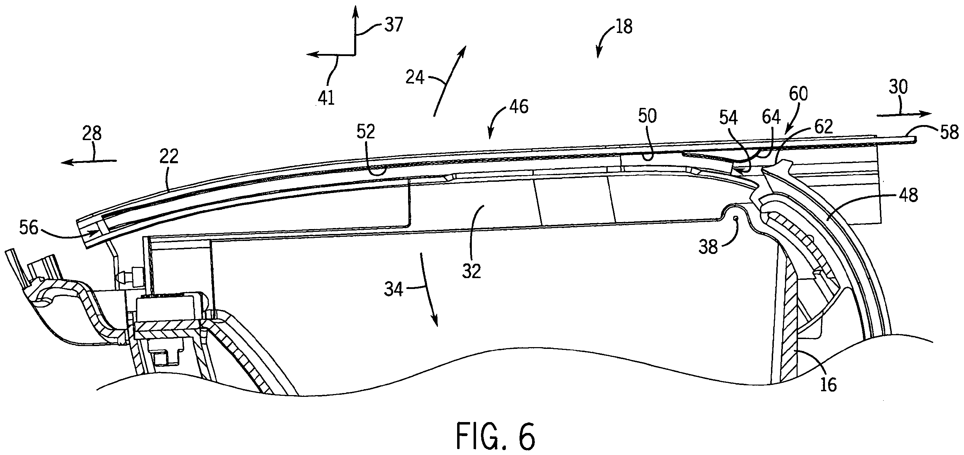

FIG. 6 is a cross-sectional view of the adjustable armrest assembly 18 of FIG. 5. As illustrated, the armrest 22 is in the lowered position and the retracted position. As previously discussed, the armrest assembly 18 includes a track assembly 46 that extends along the floor console 16, the shroud 32, and the armrest 22. As illustrated, with the armrest 22 in the lowered and retracted position, the first track 48, the second track 50, and the third track 52 are aligned with one another. Accordingly, the track assembly 46 facilitates sliding movement of the tambour door between the opened position and the closed position relative to the armrest 22.

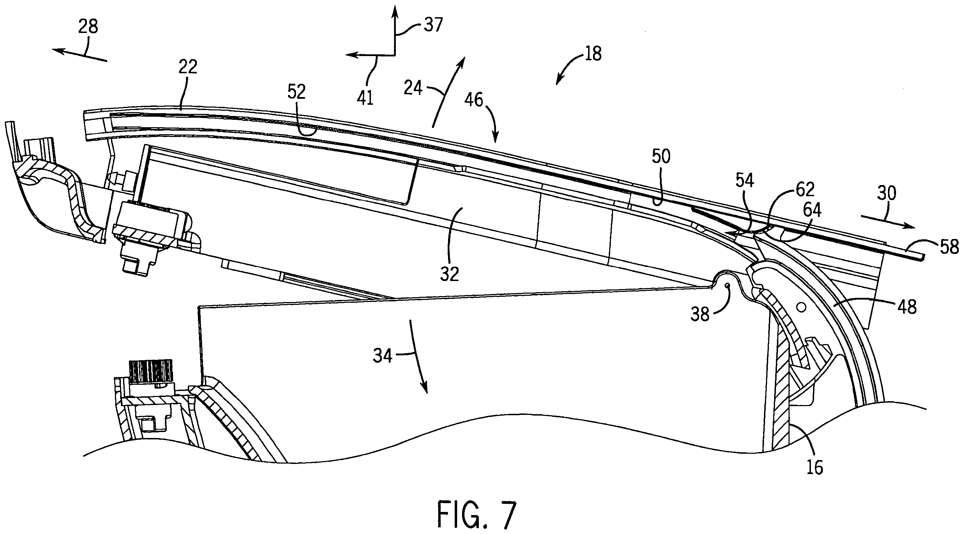

FIG. 7 is a cross-sectional view of the adjustable armrest assembly 18 of FIG. 5 with the armrest in a raised position. As illustrated, the second track 50 and the third track 52 form a rotatable portion of the track assembly 46, which is configured to rotate relative to a fixed portion of the track assembly (e.g., the first track 48). As previously discussed, the rotatable portion is separated from the fixed portion by the gap 60, which facilitates rotation of the shroud 32 relative to the floor console 16. With the armrest 22 in the raised position, the first track 48 is aligned with the second track 50, thereby facilitating sliding movement of the tambour door. Furthermore, in the illustrated embodiment, the first track 48 includes a first contact surface 62, and the second track 50 includes a second contact surface 64. The contact surfaces 62 and 64 are configured to block rotation of the armrest 22 beyond the illustrated raised position.

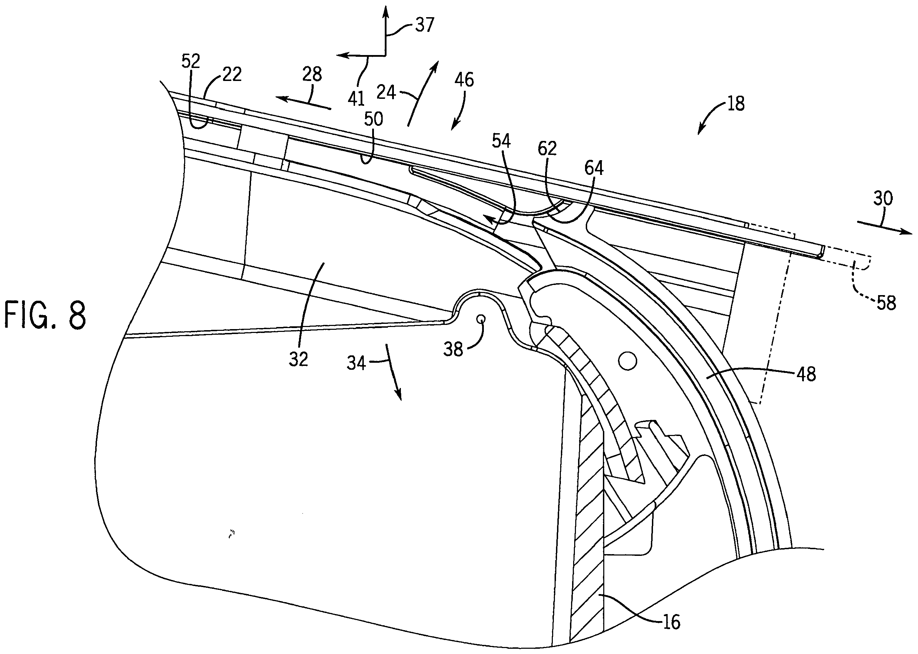

FIG. 8 is a cross-sectional view of the adjustable armrest assembly of FIG. 5 with the armrest in a raised and extended position. As illustrated, the second track 50 and the third track 52 form an expandable portion of the track assembly 46. The expandable portion is configured to enable the armrest 22 to slide relative to the shroud 32, and to establish a substantially continuous path along the expandable portion while the armrest is in the retracted position, the illustrated extended position, or a position therebetween. With the armrest 22 in the extended position, the second track 50 is aligned with the third track 52, thereby facilitating sliding movement of the tambour door.

While only certain features and embodiments of the invention have been illustrated and described, many modifications and changes may occur to those skilled in the art (e.g., variations in sizes, dimensions, structures, shapes and proportions of the various elements, values of parameters (e.g., temperatures, pressures, etc.), mounting arrangements, use of materials, colors, orientations, etc.) without materially departing from the novel teachings and advantages of the subject matter recited in the claims. The order or sequence of any process or method steps may be varied or re-sequenced according to alternative embodiments. It is, therefore, to be understood to cover all such modifications and changes, as long as they remain within the scope of the appended claims. Furthermore, in an effort to provide a concise description of the exemplary embodiments, all features of an actual implementation may not have been described (i.e., those unrelated to the presently contemplated best mode of carrying out the invention, or those unrelated to enabling the claimed invention). It should be appreciated that in the development of any such actual implementation, as in any engineering or design project, numerous implementation specific decisions may be made. Such a development effort might be complex and time consuming, but would nevertheless be a routine undertaking of design, fabrication, and manufacture for those of ordinary skill having the benefit of this disclosure, without undue experimentation.

## Claims

1. A vehicle armrest assembly (18) comprising:
- a support structure (16);
- a shroud (32) pivotally coupled to the support structure (16);
- an armrest (22) slidingly supported by the shroud (32), wherein the armrest (22) is configured to slide between a retracted position and an extended position relative to the shroud (32), and the shroud (32) facilitates rotation of the armrest (22) between a raised position and a lowered position relative to the support structure (16);
- a track assembly (46) extending along the support structure (16), the shroud (32), and the armrest (22); and
- a tambour door (20) slidingly supported by the track assembly (46), wherein the track assembly (46) is configured to enable the tambour door (20) to slide between an opened position and a closed position relative to the armrest (22) while the armrest (22) is in the retracted position, the extended position, or a position therebetween, and while the armrest (22) is in the raised position, the lowered position, or a position therebetween.

2. The vehicle armrest assembly (18) of Claim 1 wherein the track assembly (46) comprises an expandable portion configured to enable the armrest (22) to slide relative to the shroud (32), and to establish a substantially continuous path along the expandable portion while the armrest (22) is in the retracted position, the extended position, or a position therebetween.

3. The vehicle armrest assembly (18) of Claim 1 or 2 wherein the track assembly (46) comprises a rotatable portion configured to facilitate rotation of the shroud (32) relative to the support structure (16).

4. The vehicle armrest assembly (18) of Claim 3 wherein the rotatable portion is separated from a fixed portion of the track assembly (46) by a gap (60) while the armrest (22) is in the lowered position.

5. The vehicle armrest assembly (18) of any of Claims 1 to 4 comprising a rail assembly (45) coupled to the shroud (32) and to the armrest (22), wherein the rail assembly (45) is configured to enable the armrest (22) to slide relative to the shroud (32).

6. The vehicle armrest assembly (18) of any of Claims 1 to 5 comprising an adjustment mechanism (36) configured to hold the armrest (22) in one of a plurality of vertical positions including the lowered position and the raised position.

7. The vehicle armrest assembly (18) of any of Claims 1 to 5 comprising an adjustment mechanism (36) configured to hold the armrest (22) in one of a plurality of vertical positions including the lowered position and the raised position, wherein the shroud (32) is pivotally coupled to the support structure (16) by a pivot joint (38), the pivot joint (38) is positioned at a first longitudinal end of the vehicle armrest assembly (18), and the adjustment mechanism (36) is positioned at a second longitudinal end of the vehicle armrest assembly (18), opposite the first longitudinal end.

8. The vehicle armrest assembly (18) of any of Claims 1 to 6 wherein the track assembly (46) comprises a first track (48), a second track (50), and a third track (52), wherein the support structure (16) comprises the first track (48), the shroud (32) comprises the second track (50), and the armrest (22) comprises the third track (52).

9. The vehicle armrest assembly (18) of Claim 8 wherein the tambour door (20) is slidingly supported by the first, second, and third tracks (48, 50, 52), wherein the first, second, and third tracks (48, 50, 52) are aligned with one another to enable the tambour door (20) to slide between the opened position and the closed position relative to the armrest (22) while the armrest (22) is in the retracted position, the extended position, or a position therebetween, and while the armrest (22) is in the raised position, the lowered position, or a position therebetween.

10. The vehicle armrest assembly (18) of Claim 8 or 9 wherein the second and third tracks (50, 52) interface with one another to establish a substantially continuous path between a first end (54) of the second track (50) and a second end (56) of the third track (52) while the armrest (22) is in the retracted position, the extended position, or a position therebetween.

11. The vehicle armrest assembly (18) of any of Claims 8 to 10 wherein the first track (48) and the second track (50) are separated from one another by a gap (60) while the armrest (22) is in the lowered position to facilitate rotation of the shroud relative to the support structure (16).

12. The vehicle armrest assembly (18) of any of Claims 1 to 11 wherein the support structure (16) comprises a storage compartment (44) accessible while the tambour door (22) is in the open position.

13. The vehicle armrest assembly (18) of any of Claims 1 to 12 wherein the shroud (32) is at least partially disposed within a recess (26) of the support structure (16).

14. The vehicle armrest assembly (18) of any of Claims 1 to 13 wherein the support structure (16) comprises a vehicle console.

## Patentansprüche

1. Fahrzeug-Armlehnenanordnung (18), welche Folgendes aufweist:
- eine Stützstruktur (16);
- eine Ummantelung (32), welche mit der Stützstruktur (16) schwenkbar verbunden ist;
- eine Armlehne (22), welche mittels der Ummantelung (32) verschiebbar gestützt ist, wobei die Armlehne (22) dazu ausgebildet ist, sich zwischen einer zurückgezogenen Position und einer ausgezogenen Position relativ zu der Ummantelung (32) zu verschieben, und wobei die Ummantelung (32) eine Rotation der Armlehne (22) zwischen einer angehobenen Position und einer abgesenkten Position relativ zu der Stützstruktur (16) zu erleichtern;
- eine Schienenanordnung (46), die sich entlang der Stützstruktur (16), der Ummantelung (32), und der Armlehne (22) erstreckt; und
- eine Rolltür (20), die mittels der Schienenanordnung (46) verschiebbar gestützt ist, wobei die Schienenanordnung (46) dazu ausgebildet ist, es der Rolltür (20) zu ermöglichen, sich zwischen einer geöffneten Position und einer geschlossenen Position relativ zu der Armlehne (22) zu verschieben, während die Armlehne (22) sich in der zurückgezogenen Position, der ausgefahrenen Position, oder einer Position dazwischen befindet, und während die Armlehne (22) sich in der angehobenen Position, der abgesenkten Position, oder einer Position dazwischen befindet.

2. Fahrzeug-Armlehnenanordnung (18) gemäß Anspruch 1,
wobei die Schienenanordnung (46) einen erweiterbaren Bereich aufweist, der dazu ausgebildet ist, es der Armlehne (22) zu ermöglichen, sich relativ zu der Ummantelung (32) zu verschieben und dazu ausgebildet ist, einen im Wesentlichen durchgehenden Pfad entlang des erweiterbaren Bereichs auszubilden, und zwar während die Armlehne (22) sich in der zurückgezogenen Position, der ausgefahrenen Position, oder einer Position dazwischen befindet.

3. Fahrzeug-Armlehnenanordnung (18) gemäß Anspruch 1 oder 2,
wobei die Schienenanordnung (46) einen drehbaren Bereich aufweist, der dazu ausgebildet ist, die Rotation der Ummantelung (32) relativ zu der Stützstruktur (16) zu erleichtern.

4. Fahrzeug-Armlehnenanordnung (18) gemäß Anspruch 3,
wobei der drehbare Bereich von einem feststehenden Bereich der Schienenanordnung (46) getrennt ist, und zwar mittels eines Spalts (60) während die Armlehne (22) sich in der abgesenkten Position befindet.

5. Fahrzeug-Armlehnenanordnung (18) gemäß einem der Ansprüche 1 bis 4, welche eine Laufschienenanordnung (45) aufweist, die mit der Ummantelung (32) und der Armlehne (22) verbunden ist, wobei die Laufschienenanordnung (45) dazu ausgebildet ist, es der Armlehne (22) zu ermöglichen, sich relativ zu der Ummantelung (32) zu verschieben.

6. Fahrzeug-Armlehnenanordnung (18) gemäß einem der Ansprüche 1 bis 5, welche einen Verstellungsmechanismus (36) aufweist, der dazu ausgebildet ist, die Armlehne (22) in einer Position von einer Vielzahl von vertikalen Positionen zu halten, wobei die vertikalen Positionen die abgesenkte Position und die angehobene Position miteinbeziehen.

7. Fahrzeug-Armlehnenanordnung (18) gemäß einem der Ansprüche 1 bis 5, welche einen Verstellungsmechanismus (36) aufweist, der dazu ausgebildet ist, die Armlehne (22) in einer Position von einer Vielzahl von vertikalen Positionen zu halten, die die abgesenkte Position und die angehobene Position miteinbeziehen, wobei die Ummantelung (32) mittels eines Drehgelenks (38) mit der Stützstruktur (16) schwenkbar verbunden ist, wobei das Drehgelenk (38) an einem ersten Längsende der Fahrzeug-Armlehnenanordnung (18) angeordnet ist, und wobei der Verstellungsmechanismus (36) an einem zweiten Längsende der Fahrzeug-Armlehnenanordnung (18) entgegengesetzt zu dem ersten Längsende angeordnet ist.

8. Fahrzeug-Armlehnenanordnung (18) gemäß einem der Ansprüche 1 bis 6, wobei die Schienenanordnung (46) eine erste Schiene (48), eine zweite Schiene (50), und eine dritte Schiene (52) aufweist, wobei die Stützstruktur (16) die erste Schiene (48) aufweist, wobei die Ummantelung (32) die zweite Schiene (50) aufweist, und wobei die Armlehne (22) die dritte Schiene (52) aufweist.

9. Fahrzeug-Armlehnenanordnung (18) gemäß Anspruch 8,
wobei die Rolltür (20) mittels der ersten, zweiten und dritten Schiene (48, 50, 52) verschiebbar gestützt ist, wobei die erste, zweite und dritte Schiene (48, 50, 52) zueinander ausgerichtet sind, um es der Rolltür (20) zu ermöglichen, sich zwischen der geöffneten Position und der geschlossenen Position relativ zu der Armlehne (22) zu verschieben, und zwar während die Armlehne (22) sich in der zurückgezogenen Position, in der ausgefahrenen Position oder einer Position dazwischen befindet, und während sich die Armlehne (22) in der angehobenen Position, in der abgesenkten Position oder in einer Position dazwischen befindet.

10. Fahrzeug-Armlehnenanordnung (18) gemäß Anspruch 8 oder 9,
wobei die zweite und dritte Schiene (50, 52) miteinander zusammenwirken, um einen im Wesentlichen durchgehenden Pfad zwischen einem ersten Ende (54) der zweiten Schiene (50) und einem zweiten Ende (56) der dritten Schiene (52) auszubilden, und zwar während die Armlehne (22) sich in der rückgezogenen Position, in der ausgefahrenen Position oder in einer Position dazwischen befindet.

11. Fahrzeug-Armlehnenanordnung (18) gemäß einem der Ansprüche 8 bis 10,
wobei die erste Schiene (48) und die zweite Schiene (50) voneinander mittels eines Spalts (60) getrennt sind, und zwar während die Armlehne (22) sich in der abgesenkten Position befindet, um die Rotation der Ummantelung relativ zu der Stützstruktur (16) zu erleichtern.

12. Fahrzeug-Armlehnenanordnung (18) gemäß einem der Ansprüche 1 bis 11,
wobei die Stützstruktur (16) einen Stauraum (44) aufweist, der zugängig ist, während die Rolltür (22) sich in der geöffneten Position befindet.

13. Fahrzeug-Armlehnenanordnung (18) gemäß einem der Ansprüche 1 bis 12,
wobei die Ummantelung (32) zumindest teilweise innerhalb einer Ausnehmung (26) der Stützstruktur (16) angeordnet ist.

14. Fahrzeug-Armlehnenanordnung (18) gemäß einem der Ansprüche 1 bis 13,
wobei die Stützstruktur (16) eine Fahrzeugkonsole aufweist.

## Revendications

1. Assemblage formant accoudoir de véhicule (18) comprenant :
- une structure de support (16) ;
- une enveloppe (32) couplée en pivotement sur la structure de support (16) ;
- un accoudoir (22) supporté en coulissement par l'enveloppe (32), dans lequel l'accoudoir (22) et configuré pour coulisser entre une position rétractée et une position en extension par rapport à l'enveloppe (32), et l'enveloppe (32) facilite une rotation de l'accoudoir (22) entre une position relevée et une position abaissée par rapport à la structure de support (16) ;
- un assemblage formant voie (46) s'étendant le long de la structure de support (16), de l'enveloppe (32), et de l'accoudoir (22) ; et
- une porte à tambour (20) supportée en coulissement par l'assemblage formant voie (46), dans lequel l'assemblage formant voie (46) est configuré pour permettre à la porte à tambour (20) de coulisser entre une position ouverte et une position fermée par rapport à l'accoudoir (22) lorsque l'accoudoir (22) est dans la position rétractée, la position en extension, ou une position entre celles-ci, et lorsque l'accoudoir (22) est dans la position relevée, la position abaissée, ou une position entre celles-ci.

2. Assemblage formant accoudoir de véhicule (18) selon la revendication 1, dans lequel l'assemblage formant voie (46) comprend une portion capable d'expansion configurée pour permettre à l'accoudoir (22) de coulisser par rapport à l'enveloppe (32), et pour établir un trajet sensiblement continu le long de la portion capable d'expansion alors que l'accoudoir (22) est dans la position rétractée, la position en extension, ou une position entre celles-ci.

3. Assemblage formant accoudoir de véhicule (18) selon la revendication 1 ou 2, dans lequel l'assemblage formant voie (46) comprend une portion capable de rotation, configurée pour faciliter une rotation de l'enveloppe (32) par rapport à la structure de support (16).

4. Assemblage formant accoudoir de véhicule (18) selon la revendication 3, dans lequel la portion capable de rotation est séparée d'une portion fixe de l'assemblage formant voie (46) par un intervalle (60) alors que l'accoudoir (22) dans la position abaissée.

5. Assemblage formant accoudoir de véhicule (18) selon l'une quelconque des revendications 1 à 4, comprenant un assemblage à rail (45) couplé à l'enveloppe (32) et à l'accoudoir (22), dans lequel l'assemblage à rail (45) est configuré pour permettre à l'accoudoir (22) de coulisser par rapport à l'enveloppe (32).

6. Assemblage formant accoudoir de véhicule (18) selon l'une quelconque des revendications 1 à 5, comprenant un mécanisme d'ajustement (36) configuré pour retenir l'accoudoir (22) dans une position parmi une pluralité de positions verticales incluant la position abaissée et la position relevée.

7. Assemblage formant accoudoir de véhicule (18) selon l'une quelconque des revendications 1 à 5, comprenant un mécanisme d'ajustement (36) configuré pour retenir l'accoudoir (22) dans une position parmi une pluralité de positions verticales incluant la position abaissée et la position relevée, dans lequel l'enveloppe (32) est couplée en pivotement à la structure de support (16) par un joint à pivot (38), le joint à pivot (38) étant positionné à une première extrémité longitudinale de l'assemblage formant accoudoir de véhicule (18), et le mécanisme d'ajustement (36) est positionné à une seconde extrémité longitudinale de l'assemblage formant accoudoir de véhicule (18), opposée à la première extrémité longitudinale.

8. Assemblage formant accoudoir de véhicule (18) selon l'une quelconque des revendications 1 à 6, dans lequel l'assemblage formant voie (46) comprend une première voie (48), et une seconde voie (50), et une troisième voie (52), dans lequel la structure de support (16) comprend la première voie (48), l'enveloppe (32) comprend la seconde voie (50), et l'accoudoir (22) comprend la troisième voie (52).

9. Assemblage formant accoudoir de véhicule (18) selon la revendication 8, dans lequel la porte à tambour (20) est supportée en coulissement par la première, la seconde, et la troisième voie (48, 50, 52), dans lesquelles la première, la seconde et la troisième voie (48, 50, 52) sont alignées les unes avec les autres pour permettre à la porte à tambour (20) de coulisser entre la position ouverte et la position fermée par rapport à l'accoudoir (22) alors que l'accoudoir (22) est dans la position rétractée, la position en extension, ou une position entre celles-ci, et alors que l'accoudoir (22) est dans la position relevée, la position abaissée, ou une position entre celles-ci.

10. Assemblage formant accoudoir de véhicule (18) selon la revendication 8 ou 9, dans lequel la seconde et la troisième voie (50, 52) forment interface l'une avec l'autre pour établir un trajet sensiblement continu entre une première extrémité (54) de la seconde voie (50) et une seconde extrémité (56) de la troisième voie (52) alors que l'accoudoir (22) est dans la position rétractée, la position en extension, ou une position entre celles-ci.

11. Assemblage formant accoudoir de véhicule (18) selon l'une quelconque des revendications 8 à 10, dans lequel la première voie (48) et la seconde voie (50) sont séparées l'une de l'autre par un intervalle (60) alors que l'accoudoir (22) est dans la position abaissée, pour faciliter une rotation de l'enveloppe par rapport à la structure de support (16).

12. Assemblage formant accoudoir de véhicule (18) selon l'une quelconque des revendications 1 à 11, dans lequel la structure de support (16) comprend un compartiment de stockage (44) accessible alors que la porte à tambour (22) est dans la position ouverte.

13. Assemblage formant accoudoir de véhicule (18) selon l'une quelconque des revendications 1 à 12, dans lequel l'enveloppe (32) est au moins partiellement disposée à l'intérieur d'un évidement (26) de la structure de support (16).

14. Assemblage formant accoudoir de véhicule (18) selon l'une quelconque des revendications 1 à 13, dans lequel la structure de support (16) comprend une console de véhicule.
